# EUROPEAN PATENT APPLICATION

(11) **EP 3 854 512 A1**
(43) Date of publication of application: **28.07.2021**
(21) Application number: 19862175.7
(22) Date of filing: 22.04.2019
(51) Int. Cl.: B23K 20/12, B23K 101/12, B23K 101/14, B23K 103/10

(54) **METHOD FOR PRODUCING LIQUID-COOLING JACKET**

(30) Priority: 18.09.2018 JP 2018174166
(71) Applicant: Nippon Light Metal Company, Ltd., Tokyo 105-0004 (JP)
(72) Inventor: HORI, Hisashi, Shizuoka-shi Shizuoka 421-3203 (JP); SEO, Nobushiro, Shizuoka-shi Shizuoka 421-3203 (JP)
(74) Representative: Kiwit, Benedikt
(86) International application number: PCT/JP2019/016948
(87) International publication number: WO 2020/059198

(57) **Abstract**

This method is characterized in that after only a stirring pin (F2) of a rotary tool (F) being rotated is inserted at a starting position set on a further inner side relative to a set moving track, the stirring pin (F2) is gradually inserted to a predetermined depth while moving a rotational axis of the rotary tool (F) to a position on the set moving track, and frictional stir welding is performed in a state that γ = α - β, where γ is an inclination angle of the rotational axis of the rotary tool (F) with respect to a vertical plane, β is an inclination angle of the step side face (12b) with respect to a vertical plane, and α is an inclination angle of the outer circumferential face of the stirring pin (F2) with respect to the rotational axis.

## Description

### TECHNICAL FIELD

The present invention relates to a method for manufacturing a liquid-cooling jacket.

### BACKGROUND ART

For example, a method for manufacturing a liquid-cooling jacket is disclosed in a patent literature 1. FIG. 11 is a cross sectional view showing a conventional method for manufacturing a liquid-cooling jacket. In the conventional method for manufacturing a liquid-cooling jacket, friction stir welding is performed to a butted portion J10 where a side face 102c of a sealing body 102 made of an aluminum alloy is butted against a step side face 101c of a step portion of a jacket body 101 made of an aluminum alloy. Furthermore, in the conventional method for manufacturing a liquid-cooling jacket, friction stir welding is performed in a state that only a stirring pin F2 of a rotary tool F is inserted in the butted portion J10. And further, in the conventional method for manufacturing a liquid-cooling jacket, the rotary tool F is moved in a state that a rotational axis C of the rotary tool F overlaps with the butted portion J10.

### CITATION LIST

### PATENT LITERATURE

Patent Literature 1: JP 2015-131321, A

### SUMMARY OF INVENTION

### TECHNICAL PROBLEM

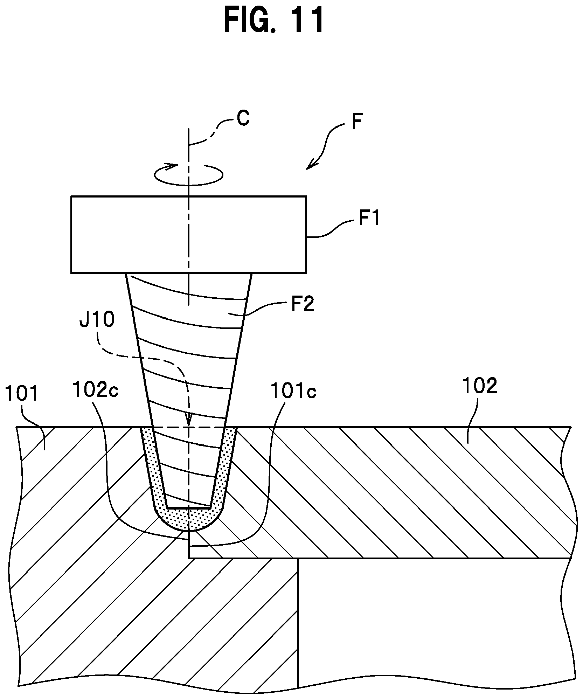

In general, the jacket body 101 tends to have a complex shape, so, for example, in some cases, the jacket body 101 is made of casting material of a 4000 series aluminum alloy, and a member having a relatively simple shape such as the sealing body 102 is made of an expansible material of a 1000 series aluminum alloy. Thus, in some cases, a liquid-cooling jacket is manufactured by joining members made of different kinds of aluminum alloys together. In such cases, in general, the jacket body 101 has a higher hardness than the sealing body 102. Hence, in a case where friction stir welding is performed in such a manner as that shown in FIG. 11, the material resistance to the stirring pin F2 to receive from the jacket body 101 is larger than that to receive from the sealing body 102. As the result, it is difficult to stir different kinds of materials with good balance by the stirring pin of the rotary tool F, so that there exists a problem that a cavity defect is caused in a plasticized region formed by joining to reduce the joining strength.

Furthermore, an outer circumferential face of the stirring pin of the rotary tool F is inclined. Accordingly, there is a problem that it is difficult to uniformly join them along the step side face 101c of the jacket body 101 in a case where the rotary tool F is inserted into the butted portion J10 in a state of setting the rotational axis C thereof straight into the butted portion J10.

From such a view point, it is an object of the present invention to provide a method for manufacturing a liquid-cooling jacket, the method being capable of appropriately joining different kinds of aluminum alloys.

### SOLUTION TO PROBLEM

In order to solve the problem, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body, wherein in the primary joining process, after only the stirring pin of the rotary tool being rotated is inserted at a starting position set at a position on an inner side relative to the set moving track, the stirring pin is gradually inserted down to the predetermined depth while a rotational axis of the rotary tool is being moved to a position on the set moving track, the friction stir welding is performed in a state that γ = α - β, where γ is an inclination angle of the rotational axis of the rotary tool with respect to a vertical plane, β is an inclination angle of the step side face with respect to a vertical plane, and α is an inclination angle of the outer circumferential face of the stirring pin with respect to the rotational axis.

Furthermore, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body, wherein in the primary joining process, the stirring pin is inserted at a starting position set on the set moving track, and gradually inserted down to the predetermined depth while being advanced in an advancing direction, and the friction stir welding is performed in a state that γ = α - β, where γ is an inclination angle of the rotational axis of the rotary tool with respect to a vertical plane, β is an inclination angle of the step side face with respect to a vertical plane, and α is an inclination angle of the outer circumferential face of the stirring pin with respect to the rotational axis.

According to such manufacturing methods, since the outer circumferential face of the stirring pin is just slightly brought in contact with the step side face of the jacket body, mixing of the first aluminum alloy into the sealing body from the jacket body can be reduced as much as possible. For this reason, in the first butted portion, the second aluminum alloy on the sealing body side is mainly frictionally stirred, so that the joining strength can be suppressed from lowering. Further, since the outer circumferential face of the stirring pin is just slightly brought in contact with the step side face of the jacket body, material resistance to the stirring pin to receive from the jacket body can be reduced as much as possible.

Furthermore, in a case where the rotational axis of the rotary tool is inclined, the biting amount between the jacket body and the rotary tool can be easily prevented from being enlarged. And, by matching the inclination angle γ to the value obtained by subtracting the inclination angle β from the inclination angle α, the angle γ being an inclination angle of the rotational axis of the rotary tool with respect to a vertical plane, the angle β being an inclination angle of the step side face with respect to a vertical plane, and the angle α being an inclination angle of the outer circumferential face of the stirring pin with respect to the rotational axis, optimal values can be chosen as the inclination angles α, β, and friction stirring can be performed in a state that the outer circumferential face of the stirring pin is in parallel with the step side face. Further, by enlarging the thickness of the sealing body, it is possible to prevent metal shortage at the joint. And further, by gradually inserting down the stirring pin, it is possible to prevent generating an excessive frictional heat at the first butted portion.

Further, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein the stirring pin has an outer circumferential face inclined to have a smaller diameter with increasing distance toward a tip thereof and a flat tip face, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face,
wherein in the primary joining process, after only the stirring pin of the rotary tool being rotated is inserted at a starting position set at a position on an inner side relative to the set moving track, the stirring pin is gradually inserted down to the predetermined depth while a rotational axis of the rotary tool is being moved to a position on the set moving track, the friction stir welding is performed in a state that γ = α - β, where γ is an inclination angle of the rotational axis of the rotary tool with respect to a vertical plane, β is an inclination angle of the step side face with respect to a vertical plane, and α is an inclination angle of the outer circumferential face of the stirring pin with respect to the rotational axis.

And furthermore, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein the stirring pin has an outer circumferential face inclined to have a smaller diameter with increasing distance toward a tip thereof and a flat tip face, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face, wherein in the primary joining process, the stirring pin is inserted at a starting position set on the set moving track, and gradually inserted down to the predetermined depth while being advanced in an advancing direction, and the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis.

According to such manufacturing methods, since the outer circumferential face of the stirring pin is just slightly brought in contact with the step side face of the jacket body, mixing of the first aluminum alloy into the sealing body from the jacket body can be reduced as much as possible. For this reason, in the first butted portion, the second aluminum alloy on the sealing body side is mainly frictionally stirred, so that the joining strength can be suppressed from lowering. Further, since the outer circumferential face of the stirring pin is just slightly brought in contact with the step side face of the jacket body, material resistance to the stirring pin to receive from the jacket body can be reduced as much as possible. And further, by bringing the stirring pin in contact with the step bottom face, the second butted portion can be firmly joined.

Furthermore, in a case where the rotational axis of the rotary tool is inclined, the biting amount between the jacket body and the rotary tool can be easily prevented from being enlarged. And, by matching the inclination angle γ to the value obtained by subtracting the inclination angle β from the inclination angle α, the angle γ being an inclination angle of the rotational axis of the rotary tool with respect to a vertical plane, the angle β being an inclination angle of the step side face with respect to a vertical plane, and the angle α being an inclination angle of the outer circumferential face of the stirring pin with respect to the rotational axis, optimal values can be chosen as the inclination angles α, β, and friction stirring can be performed in a state that the outer circumferential face of the stirring pin is in parallel with the step side face. Further, by enlarging the thickness of the sealing body, it is possible to prevent metal shortage at the joint. And further, by gradually inserting down the stirring pin, it is possible to prevent generating an excessive frictional heat at the first butted portion.

It is preferable that in the primary joining process, friction stirring is performed in a state of rotating the stirring pin at a predetermined rotational speed, and in the primary joining process, the stirring pin is inserted in a state of being rotated at a rotational speed higher than the predetermined rotational speed when the stirring pin is inserted, and moved to the set moving track while the rotational speed is gradually decreased.

According to such a manufacturing method, friction stirring can be more appropriately performed.

Further, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body, wherein in the primary joining process, an ending position is set on an inner side relative to the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

Further, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body, wherein in the primary joining process, an ending position is set on the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

According to such manufacturing methods, since the outer circumferential face of the stirring pin is just slightly brought in contact with the step side face of the jacket body, mixing of the first aluminum alloy into the sealing body from the jacket body can be reduced as much as possible. For this reason, in the first butted portion, the second aluminum alloy on the sealing body side is mainly frictionally stirred, so that the joining strength can be suppressed from lowering. Further, since the outer circumferential face of the stirring pin is just slightly brought in contact with the step side face of the jacket body, material resistance to the stirring pin to receive from the jacket body can be reduced as much as possible.

Furthermore, in a case where the rotational axis of the rotary tool is inclined, the biting amount between the jacket body and the rotary tool can be easily prevented from being enlarged. And, by matching the inclination angle γ to the value obtained by subtracting the inclination angle β from the inclination angle α, the angle γ being an inclination angle of the rotational axis of the rotary tool with respect to a vertical plane, the angle β being an inclination angle of the step side face with respect to a vertical plane, and the angle α being an inclination angle of the outer circumferential face of the stirring pin with respect to the rotational axis, optimal values can be chosen as the inclination angles α, β, and friction stirring can be performed in a state that the outer circumferential face of the stirring pin is in parallel with the step side face. Further, by enlarging the thickness of the sealing body, it is possible to prevent metal shortage at the joint. And further, by gradually pulling out the stirring pin, it is possible to prevent generating an excessive frictional heat at the first butted portion.

Further, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein the stirring pin has an outer circumferential face inclined to have a smaller diameter with increasing distance toward a tip thereof and a flat tip face, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face, wherein in the primary joining process, an ending position is set on an inner side relative to the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

Further, the present invention is characterized by a method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin, wherein the jacket body is made of a first aluminum alloy, the sealing body is made of a second aluminum alloy, and the first aluminum alloy is a material harder than the second aluminum alloy, and wherein an outer circumferential face of the stirring pin is inclined to have a smaller diameter with increasing distance toward a tip thereof, the method comprising: a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion; a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face, wherein in the primary joining process, an ending position is set on the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

According to such manufacturing methods, since the outer circumferential face of the stirring pin is just slightly brought in contact with the step side face of the jacket body, mixing of the first aluminum alloy into the sealing body from the jacket body can be reduced as much as possible. For this reason, in the first butted portion, the second aluminum alloy on the sealing body side is mainly frictionally stirred, so that the joining strength can be suppressed from lowering. Further, since the outer circumferential face of the stirring pin is just slightly brought in contact with the step side face of the jacket body, material resistance to the stirring pin to receive from the jacket body can be reduced as much as possible. And further, by bringing the stirring pin in contact with the step bottom face, the second butted portion can be firmly joined.

Furthermore, in a case where the rotational axis of the rotary tool is inclined, the biting amount between the jacket body and the rotary tool can be easily prevented from being enlarged. And, by matching the inclination angle γ to the value obtained by subtracting the inclination angle β from the inclination angle α, the angle γ being an inclination angle of the rotational axis of the rotary tool with respect to a vertical plane, the angle β being an inclination angle of the step side face with respect to a vertical plane, and the angle α being an inclination angle of the outer circumferential face of the stirring pin with respect to the rotational axis, optimal values can be chosen as the inclination angles α, β, and friction stirring can be performed in a state that the outer circumferential face of the stirring pin is in parallel with the step side face. Further, by enlarging the thickness of the sealing body, it is possible to prevent metal shortage at the joint. And further, by gradually pulling out the stirring pin, it is possible to prevent generating an excessive frictional heat at the first butted portion.

It is preferable that in the primary joining process, friction stirring is performed in a state of rotating the stirring pin at a predetermined rotational speed, and in the primary joining process, the stirring pin is moved to the ending position while gradually increasing a rotational speed of the stirring pin from the predetermined rotational speed when the stirring pin is made to leave.

According to such a manufacturing method, friction stirring can be more appropriately performed.

It is preferable that the sealing body is made of an aluminum alloy expansible material and the jacket body is made of an aluminum alloy casting material.

It is preferable that the rotary tool is rotated clockwise in a case where the rotary tool has a spiral groove on the outer circumferential face thereof, the spiral groove being counterclockwise with increasing distance from a base end toward a tip thereof, and the rotary tool is rotated counterclockwise in a case where the rotary tool has a spiral groove on the outer circumferential face thereof, the spiral groove being clockwise with increasing distance from the base end toward the tip thereof.

According to such a manufacturing method, since the plastically fluidized metal is led toward the tip of the stirring pin through the spiral groove, generating of burrs can be reduced.

It is preferable that in the primary joining process, a rotational direction and an advancing direction of the rotary tool are set so that within a plasticized region to be formed along a moving track of the rotary tool, a jacket body side is a shear side and a sealing body side is a flow side.

According to such a manufacturing method, since the jacket body side is a shear side, stirring action by the stirring pin is enhanced around the first butted portion, so that temperature rising is expected at the first butted portion and the step side face and the side face of the sealing body can be firmly joined together at the first butted portion.

### ADVANTAGEOUS EFFECTS OF INVENTION

According to the method for manufacturing a liquid-cooling jacket according to the present invention, different kinds of aluminum alloys can be appropriately joined.

### BRIEF DESCRIPTION OF THE DRAWINGS

FIG. 1 is a perspective view showing a preparation process of a method for manufacturing a liquid-cooling jacket according to a first embodiment of the present invention;
FIG. 2 is a cross sectional view showing a placing process of the method for manufacturing the liquid-cooling jacket according to the first embodiment;
FIG. 3 is a perspective view showing a primary joining process of the method for manufacturing the liquid-cooling jacket according to the first embodiment;
FIG. 4 is a cross sectional view showing the primary joining process of the method for manufacturing the liquid-cooling jacket according to the first embodiment;
FIG. 5 is a perspective view showing the liquid-cooling jacket after the primary joining process of the manufacturing method according to the first embodiment is finished;
FIG. 6 is a cross sectional view showing the liquid-cooling jacket after the primary joining process of the manufacturing method according to the first embodiment is finished;
FIG. 7 is a plan view showing a primary joining process of a method for manufacturing a liquid-cooling jacket according to a second embodiment of the present invention;
FIG. 8 is a cross sectional view showing the primary joining process of the method for manufacturing the liquid-cooling jacket according to the second embodiment;
FIG. 9 is a plan view showing the liquid-cooling jacket after the primary joining process of the manufacturing method according to the second embodiment is finished;
FIG. 10 is a cross sectional view showing a primary joining process of a method for manufacturing a liquid-cooling jacket according to a third embodiment; and
FIG. 11 is a cross sectional view showing a conventional method for manufacturing a liquid-cooling jacket.

### DESCRIPTION OF EMBODIMENTS

### <First embodiment>

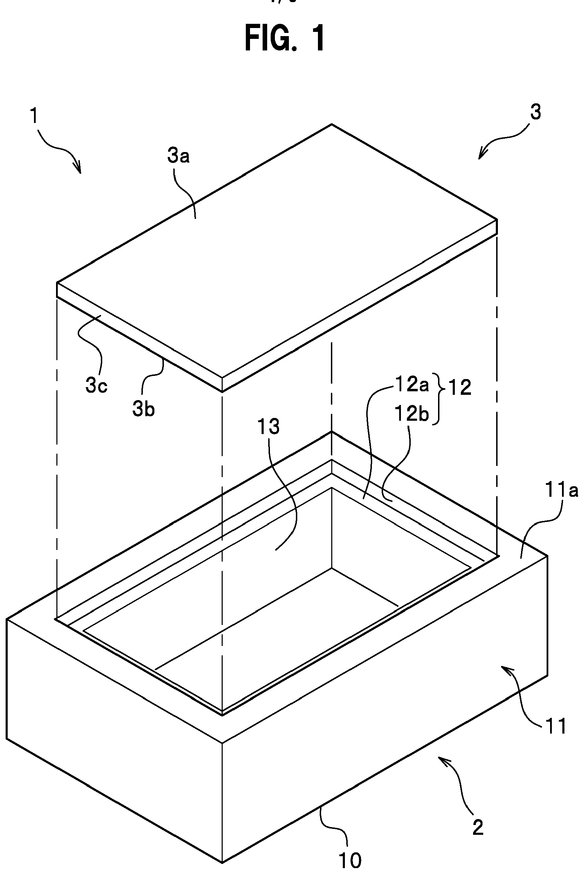

A method for manufacturing a liquid-cooling jacket according to an embodiment of the present invention will be described in detail with reference to Figures. As shown in FIG. 1, the method for manufacturing the liquid-cooling jacket according to the embodiment of the present invention is a method where a liquid-cooling jacket 1 is manufactured with use of friction stir welding to a jacket body 2 and a sealing body 3. The liquid-cooling jacket 1 is a member on the sealing body 3 of which a heating body (not shown) is placed and inside which a fluid is allowed to flow to exchange heat with the heating body. Note that, hereinafter, a "front face" means the face opposite to a "back face".

The method for manufacturing the liquid-cooling jacket according to this embodiment has a preparation process, a placing process, and a primary joining process. The preparation process is a process to prepare the jacket body 2 and the sealing body 3. The jacket body 2 is mainly composed of a bottom portion 10 and a peripheral wall portion 11. The jacket body 2 is made of a material mainly containing a first aluminum alloy. The first aluminum alloy is, for example, an aluminum alloy casting material such as JISH5302 ADC12 (based on Al-Si-Cu).

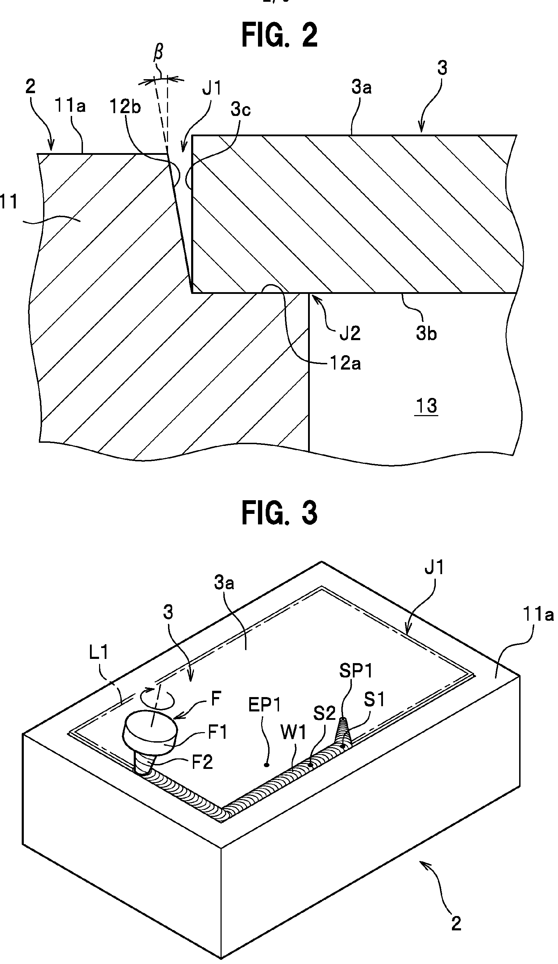

As shown in FIG. 1, the bottom portion 10 is a plate-like member having a rectangular shape in a plan view. The peripheral wall portion 11 is a wall portion standing on the peripheral edge portion of the bottom portion 10 and having a rectangular frame shape. A peripheral wall step portion 12 is formed at an inner peripheral edge of the peripheral wall portion 11. The peripheral wall step portion 12 is composed of a step bottom face 12a and a step side face 12b standing on the step bottom face 12a. As shown in FIG. 2, the step side face 12b inclines toward the outside to spread with increasing distance from the step bottom face 12a toward an opening portion. An inclination angle β of the step side face 12b with respect to a vertical plane may be appropriately set, and is set to, for example, 3° to 30° with respect to the vertical plane. A recessed portion 13 is defined by the bottom portion 10 and the peripheral wall portion 11. Here, the vertical plane is defied as a plane composed of an advancing vector of a rotary tool F and a vertical vector.

The sealing body 3 is a plate-like member to seal the opening portion of the jacket body 2. The sealing body 3 has a size capable of being placed on the peripheral wall step portion 12. A thickness of the sealing body 3 is larger than a height dimension of the step side face 12b. The thickness of the sealing body 3 is appropriately set so that no shortage of metal occurs in a joint portion when the primary joining process to be described later is performed. The sealing body 3 is made of a material mainly containing a second aluminum alloy. The second aluminum alloy has a hardness lower than the first aluminum alloy. The second aluminum alloy is, for example, an aluminum alloy expansible material such as JIS A1050, A1100, A6063.

The placing process is a process to place the sealing body 3 on the jacket body 2 as shown in FIG. 2. In the placing process, a back face 3b of the sealing body 3 is placed on the step bottom face 12a. A side face 3c of the sealing body 3 is butted against the step side face 12b to form a first butted portion J1. The first butted portion J1 may also include a case where two members are butted against each other to have an approximately V-shaped gap therebetween in cross section like this embodiment. Furthermore, the back face 3b of the sealing body 3 is butted against the step bottom face 12a to form a second butted portion J2.

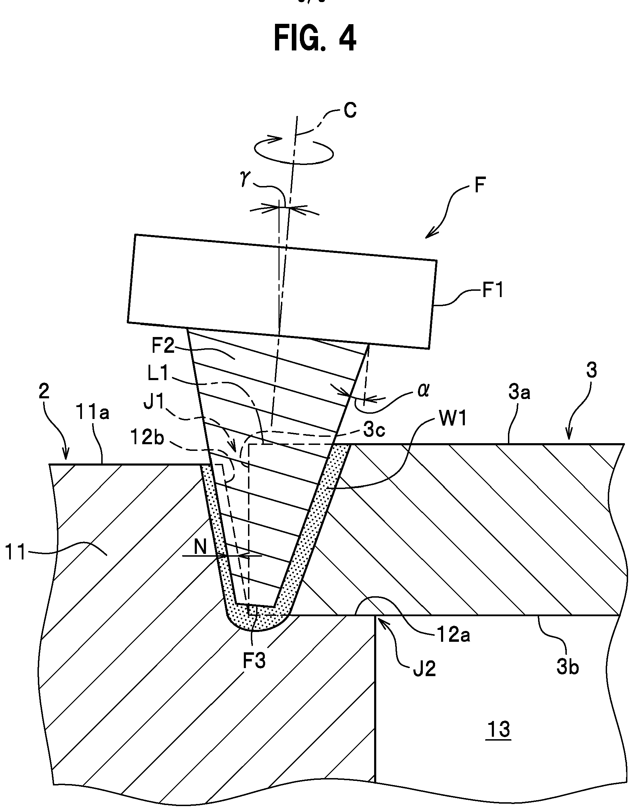

As shown in FIGS. 3 and 4, the primary joining process is a process where friction stir welding is performed to the jacket body 2 and the sealing body 3 with use of the rotary tool F. The rotary tool F is composed of a connecting portion F1 and a stirring pin F2. The rotary tool F is made of, for example, a tool steel. The connecting portion F1 is a portion to be connected to a rotary shaft of a friction stir device (not shown). The connecting portion F1 has a column shape, and has a thread hole (not shown) into which a bolt is fastened. The friction stir device, to which the rotary tool F is connected, is, for example, a robot arm equipped with a rotation driving device such as a spindle unit at the tip thereof, so that a rotational axis C of the rotary tool F can be freely inclined.

The stirring pin F2 hangs down from and is coaxial with the connecting portion F1. The stirring pin F2 has a smaller diameter with increasing distance from the connecting portion F1 toward the tip thereof. As shown in FIG.4, the stirring pin F2 has a tip face F3, which is flat and orthogonal to the rotational axis C, at the tip thereof. That is, an outer face of the stirring pin F2 is composed of an outer circumferential face having a smaller diameter with increasing distance toward the tip and the flat tip face F3 formed at the tip. When it is viewed from the side, an inclination angle α of the outer circumferential face of the stirring pin F2 with respect to the rotational axis C may be appropriately set to an angle in the range, for example, 5° to 30°.

The stirring pin F2 has a spiral groove formed in the outer circumferential face thereof. In this embodiment, since the rotary tool F is rotated clockwise, the spiral groove is formed to rotate counterclockwise with increasing distance from the base end toward the tip. In other words, the spiral groove is formed to rotate counterclockwise with increasing distance from the base end toward the tip when it is viewed from the upper side.

Note that, in a case where the rotary tool F is rotated counterclockwise, it is preferable that the spiral groove is formed to rotate clockwise with increasing distance from the base end toward the tip. In other words, the spiral groove of this case is formed to rotate clockwise with increasing distance from the base end toward the tip when it is viewed from the upper side. By forming the spiral groove in such a shape, plastically fluidized metal formed by friction stirring is led toward the tip of the stirring pin F2 through the spiral groove. By this, the amount of metal to leak out of the metal members to be joined (the jacket body 2 and the sealing body 3) can be reduced.

As shown in FIG. 3, in the primary joining process, three sections of an insertion section, an original section and a leaving section are frictionally stirred continuously. The insertion section is a section which is to a middle point S1 from a starting position SP1. The original section is from the middle point S1 on a set moving track L1 and extends around the sealing body 3 to complete one round and further to the other middle point S2. The leaving section is a section which is to an ending position EP1 from the other middle point S2. The middle points S1 and S2 are set on the set moving track L1. The set moving track L1 is set on an inner side relative to the side face 3c of the sealing body 3. The set moving track L1 is a track on which the center of the tip face F3 of the stirring pin F2 moves when it is viewed in a plan view.

The starting position SP1 is set on an inner side relative to the set moving track L1 on the front face 3a of the sealing body 3. In this embodiment, the starting position SP1 is set at such a position that an angle defined by a line segment connecting the starting position SP1 and the middle point S1 and the set moving track L1 is an obtuse angle.

In the insertion section in the primary joining process, friction stirring is performed from the starting position SP1 to the middle point S1. In the insertion section, the stirring pin F2 being rotated clockwise is inserted at the starting position SP1, and moved to the middle point S1. In this case, the stirring pin F2 is gradually inserted in such a manner that it reaches a "predetermined depth" set beforehand by the time it reaches the middle point S1. That is, the rotary tool F is gradually lowered while the rotary tool F is being moved to the set moving track L1 without being kept at one position.

After the rotary tool F reaches the middle point S1, the rotary tool F continuously shifts to the original section for friction stir welding. When friction stirring is performed with use of the rotary tool F, only the stirring pin F2 being rotated clockwise is inserted in the sealing body 3 and moved in a state that the connecting portion F1 is away from the sealing body 3. In other words, friction stirring is performed in a state that a base end portion of the stirring pin F2 is exposed. Metal which has been frictionally stirred is hardened, so that a plasticized region W1 is formed along a moving track of the rotary tool F. In this embodiment, the stirring pin F2 is inserted at the starting position SP1 set on the sealing body 3 and the rotary tool F is moved clockwise relative to the sealing body 3.

As shown in FIGS. 3, 4, in the original section in the primary joining process, the rotary tool F is set to a state that the rotational axis C of the rotary tool F is inclined toward the sealing body 3 side and the outer circumferential face of the stirring pin F2 is slightly in contact with the step side face 12b. Furthermore, the rotary tool F is moved in a state that the center of the tip face F3 is located on the set moving track L1 set beforehand in a plan view. In other words, the set moving track L1 is set at a position where the center of the tip face F3 of the stirring pin F2 passes and is set so that the outer circumferential face of the stirring pin F2 is slightly in contact with the step side face 12b.

A contact depth N between the outer circumferential face of the stirring pin F2 and the step side face 12b may be appropriately set, and, for example, is set to 1.0 mm or less. In the original section, the "predetermined depth" for the stirring pin F2 is set to such an extent that the tip face F3 of the stirring pin F2 is not brought in contact with the step bottom face 12a. Note that, the tip face F3 of the stirring pin F2 may be set to reach the step bottom face 12a.

Hereinafter, an inclination angle of the rotary tool F will be described in detail. As shown in FIG. 4, in the primary joining process, the rotational axis C of the rotary tool F is inclined toward a central side (or an outer peripheral side) of the jacket body 2 by an inclination angle γ with respect to a vertical plane. Consequently, the outer circumferential face of the stirring pin F2 is slightly brought in contact with the step side face 12b. In such a state, the rotary tool F is moved one round along the first butted portion J1 while plastically fluidized material is flowed into the gap of the first butted portion J1.

The inclination angle γ, at which the rotational axis C of the rotary tool F is inclined with respect to a vertical plane, is the same as the value obtained by subtracting the inclination angle β of the step side face 12b with respect to a vertical plane from the inclination angle α between the rotational axis C and the outer circumferential face of the stirring pin F2. Therefore, the step side face 12b and the outer circumferential face of the stirring pin F2 facing the step side face 12b are parallel with each other. That is, the direction where the rotational axis C of the rotary tool F is inclined is determined by the relationship between the inclination angles α and β. For example, in a case that "α > β", the inclination angle γ is a positive value, and the rotational axis C of the rotary tool F is inclined toward the central side of the jacket body 2. In a case that "α < β", the inclination angle γ is a negative value, and the rotational axis C of the rotary tool F is inclined toward the outer periphery side of the jacket body 2. In a case that "α = β", the inclination angle γ is zero, and the rotational axis C of the rotary tool F is not inclined and is set to be parallel with a vertical plane.

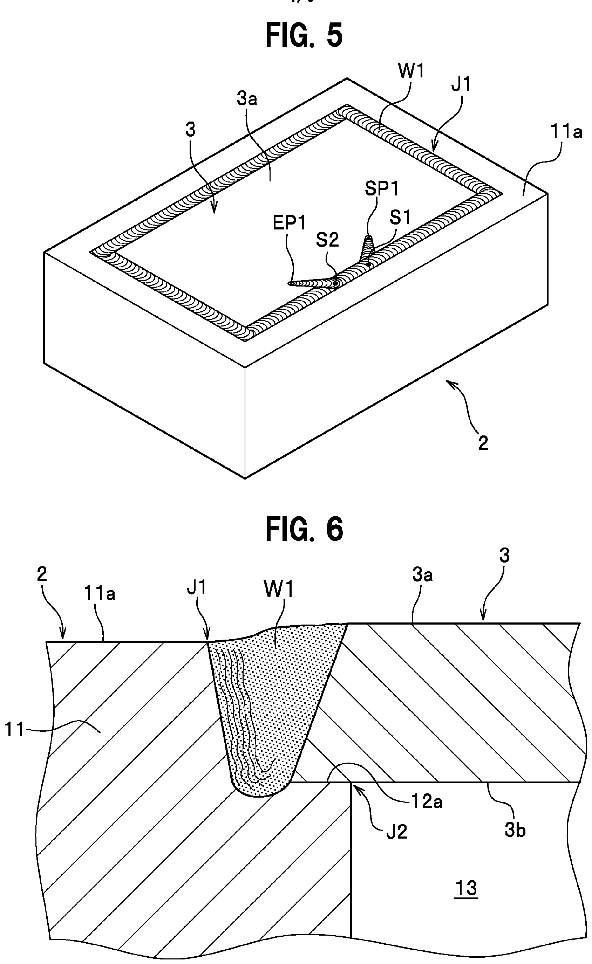

As shown in FIG. 5, after the rotary tool F is moved one round around the sealing body 3, the beginning and the end of the plasticized region W1 on the set moving track L1 overlap each other. After the rotary tool F reaches the other middle point S2, it continuously shifts to the leaving section. In the leaving section, the stirring pin F2 is gradually pulled out (moved upward) while the rotary tool F is being moved to the ending position EP1 from the other middle point S2. After the rotary tool F reaches the ending position EP1, the rotary tool F is made to leave the sealing body 3. The ending position EP1 is set at a position where an angle defined by a line segment connecting the ending position EP1 and the other middle point S2 and the set moving track L1 is an obtuse angle. As shown in FIG. 6, the plasticized region W1 is formed at the first butted portion J1.

According to the method for manufacturing a liquid-cooling jacket according to the embodiment described above, since the outer circumferential face of the stirring pin F2 is just slightly brought in contact with the step side face 12b of the jacket body 2, mixing of the first aluminum alloy into the sealing body 3 from the jacket body 2 can be reduced as much as possible. Accordingly, in the first butted portion J1, the second aluminum alloy of the sealing body 3 is mainly frictionally stirred, so that lowering of the joint strength can be restrained. Further, since the outer circumferential face of the stirring pin F2 is just slightly brought in contact with the step side face 12b of the jacket body 2, the material resistance which the stirring pin F2 receives from the jacket body 2 can be reduced as much as possible.

By matching the inclination angle γ of the rotational axis C of the rotary tool F with respect to a vertical plane to the value obtained by subtracting the inclination angle β of the step side face 12b with respect to a vertical plane from the inclination angle α of the outer circumferential face of the stirring pin F2 with respect to the rotational axis C, optimal values can be determined as the inclination angles α and β, and friction stirring can be performed in the state that the circumferential face of the stirring pin F2 is parallel with the step side face 12b. Hereby, the outer circumferential face of the stirring pin F2 can be uniformly brought in contact with the step side face 12b along the height thereof, so that joining can be performed with good balance. Furthermore, metal shortage of the joint can be prevented by setting the thickness of the sealing body 3 larger than the height dimension of the step side face 12b.

At a starting position or an ending position set on the first butted portion J1, there is a concern that poor joining is caused because of an excessive frictional heat generated at the starting position or the ending position when the rotary tool F is vertically inserted in or vertically pulled out at the positions. However, by gradually inserting the stirring pin F2 while the stirring pin F2 is being moved in an advancing direction in the insertion section like this embodiment, the frictional heat at the first butted portion J1 can be prevented from excessively generating. Further, by gradually pulling out the stirring pin F2 while the stirring pin F2 is being moved in an advancing direction in the leaving section, the frictional heat at the first butted portion J1 can be prevented from excessively generating.

In the primary joining process, the starting position SP1 may be set to an appropriate position. However, by setting the position so that an angle defined by the set moving track L1 and the starting position SP1 is obtuse, the rotary tool F can smoothly shift to the original section without lowering of moving speed of the rotary tool F at the middle point S1. Hereby, an excessive frictional heat, which is caused by stopping of or lowering of the moving speed of the rotary tool F, can be prevented. Further, also about the ending position EP1, by setting the ending position EP1 in the same manner as the starting position SP1, the rotary tool F can be smoothly shifted to the leaving section from the original section.

In the embodiment, by matching the inclined angle γ of the rotational axis C of the rotary tool F with respect to a vertical plane to a value obtained by subtracting the inclined angle β of the step side face 12b with respect to a vertical plane from the inclined angle α of the outer circumferential face of the stirring pin F2 with respect to the rotational axis C, optimal values can be determined as the inclination angles α, β. For example, the inclination angle α is determined by the design concept of a rotary tool in the technical field of friction stir welding (FSW = Friction Stir Welding), and the inclination angle β is determined by the mold design concept in the casting field (for example, die casting) . That is, both the inclination angles α, β have optimal values according to the design concepts, so that it is sometimes difficult to set the inclination angle α equal to the inclination angle β. However, according to this embodiment, the inclination angles α, β can be freely determined. Consequently, optimal values can be determined as the inclination angles α, β.

Further, since the stirring pin F2 is just slightly brought in contact with the step side face 12b, unbalance between one side and the other side of the stirring pin F2 with respect to the rotational axis C of the stirring pin F2, the unbalance being caused by material resistances to the stirring pin F2, can be reduced as much as possible . Thus, plastically fluidized material is frictionally stirred with good balance, so that lowering of the joint strength is restrained.

In the primary joining process, the rotational direction and the advancing direction of the rotary tool F may be appropriately set, but the rotational direction and the advancing direction of the rotary tool F have been set so that within the plasticized region W1 to be formed along a moving track of the rotary tool F, the jacket body 2 side is a shear side and the sealing body 3 side is a flow side. Hereby, stirring action by the stirring pin F2 around the first butted portion J1 is enhanced, temperature rising can be expected at the first butted portion J1, and the step side face 12b and the side face 3c of the sealing body 3 can be more firmly joined at the first butted portion J1.

Note that, a shear side (Advancing side) means a side where a relative speed of the outer circumferential edge of the rotary tool relative to a portion to be joined is a speed obtained by adding an advancing speed of the rotary tool to a tangential speed of the outer circumferential edge of the rotary tool. On the other hand, a flow side (Retreating side) means a side where a relative speed of the outer circumferential edge of the rotary tool relative to the portion to be joined becomes slow because the rotary tool rotates in the direction opposite to the advancing direction of the rotary tool.

The first aluminum alloy of the jacket body 2 is a material harder than the second aluminum alloy of the sealing body 3. For this reason, the durability of the liquid-cooling jacket 1 can be enhanced. And it is preferable that the first aluminum alloy of the jacket body 2 is an aluminum alloy casting material and the second aluminum alloy of the sealing body 3 is an aluminum alloy expansible material. In a case where the first aluminum alloy is, for example, an aluminum alloy casting material based on Al-Si-Cu such as JISH5302 ADC12, castability, strength and machinability of the jacket body 2 can be enhanced. And in a case where the second aluminum alloy is, for example, a material based on JIS A1000 or A6000, processing ability and thermal conductivity of the sealing body 3 can be enhanced.

### <Second embodiment>

Next, a method for manufacturing a liquid-cooling jacket according to a second embodiment of the invention will be described. The method for manufacturing the liquid-cooling jacket according to the second embodiment includes a preparation process, a placing process, and a primary joining process. Since the preparation process and the placing process of the method for manufacturing the liquid-cooling jacket according to the second embodiment is the same as in the first embodiment, description thereof will be omitted. Further, in the second embodiment, differences from the first embodiment will be mainly described.

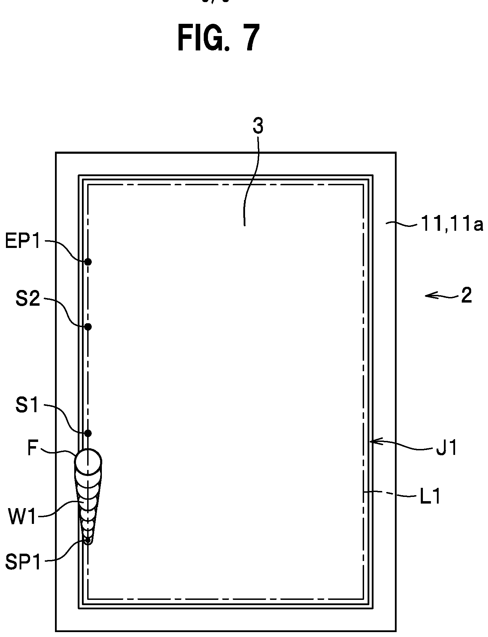

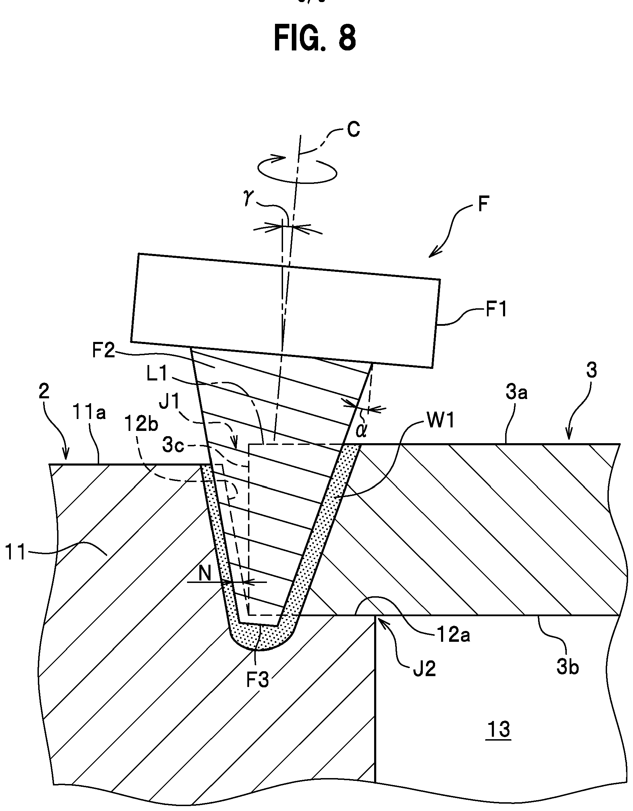

The primary joining process is a process where friction stir welding is performed to the jacket body 2 and the sealing body 3 with use of the rotary tool F as shown in FIGS. 7, 8. When the stirring pin F2 is moved along the first butted portion J1 in the primary joining process, friction stir welding is performed in a state that the stirring pin F2 is slightly in contact with the step side face 12b at the outer circumferential face thereof and the tip face F3 thereof is contact with the step bottom face 12a.

In the primary joining process, the joining is continuously performed to the insertion section, the original section, and the leaving section. In this embodiment, the starting position SP1 is set on the set moving track L1. In the insertion section, the stirring pin F2 being rotated clockwise is inserted at the starting position SP1, and the rotary tool F is gradually inserted while the rotary tool F is being moved along the set moving track L1. The stirring pin F2 is inserted down to a position of "predetermined depth" at latest by the time of reaching the middle point S1.

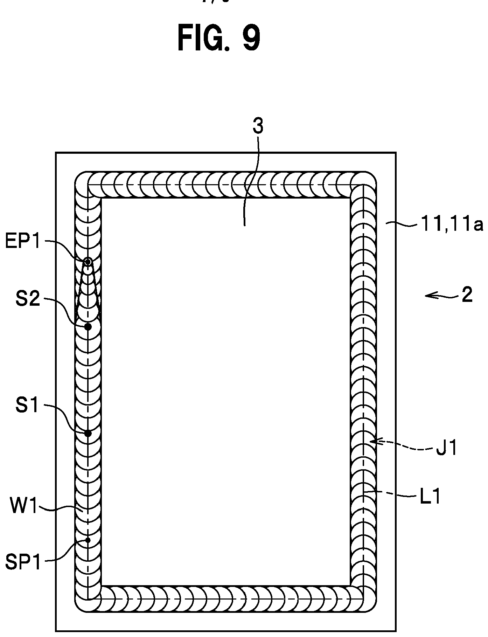

When the rotary tool F reaches the middle point S1, the rotary tool F shifts to the original section as it is. In the original section, in the same manner as in the first embodiment as shown in FIG. 8, the rotary tool F is moved one round around the sealing body 3 in a state that the rotary tool F is inclined toward the sealing body 3 and the outer circumferential face of the stirring pin F2 is slightly brought in contact with the step side face 12b. When the rotary tool F reaches the other middle point S2, the rotary tool F shifts to the leaving section as it is as shown in FIG. 9. In the leaving section, the rotary tool F is gradually pulled out while the rotary tool F is being moved from the other middle point S2 to the ending position EP1. The ending position EP1 is set on the set moving track L1 in this embodiment. When the rotary tool F reaches the ending position EP1, the rotary tool F is made to leave the sealing body 3.

According to the method for manufacturing the liquid-cooling jacket according to this embodiment described in the above, the outer circumferential face of the stirring pin F2 is just slightly brought in contact with the step side face 12b of the jacket body 2. Hence, the mixing amount of the first aluminum alloy into the sealing body 3 from the jacket body 2 can be reduced as much as possible. Hereby, in the first butted portion J1, the second aluminum alloy on the sealing body 3 side is mainly frictionally stirred. For this reason, the joining strength can be suppressed from lowering. Further, since the outer circumferential face of the stirring pin F2 is just slightly brought in contact with the step side face 12b of the jacket body 2, the material resistance which the stirring pin F2 receives from the jacket body 2 can be reduced as much as possible. Since friction stir welding is performed in a state that the tip face F3 of the stirring pin F2 is in contact with the step bottom face 12a, the second butted portion J2 can be firmly joined, and the joining strength can be enhanced.

By setting the inclination angle γ of the rotational axis C of the rotary tool F with respect to a vertical plane to the value obtained by subtracting the inclination angle β of the step side face 12b with respect to a vertical plane from the inclination angle α of the outer circumferential face of the stirring pin F2 with respect to the rotational axis C, optimal values can be determined as the inclination angles α, β, and friction stirring can be performed in a state that the outer circumferential face of the stirring pin F2 and the step side face 12b are parallel with each other. Hereby, the outer circumferential face of the stirring pin F2 can be uniformly brought in contact with the step side face 12b wholly in the height direction thereof. For this reason, joining can be performed with good balance. Moreover, by setting the thickness of the sealing body 3 larger than the height of the step side face 12b, it is possible to prevent a shortage of metal in the joint portion.

Here, when the rotary tool F is vertically pushed or pulled out at the starting position or the ending position set on the first butted portion J1, there is a concern that frictional heat is excessively generated at the starting position or the ending position to cause a poor joining. However, like in this embodiment, by gradually pushing the stirring pin F2 while the stirring pin F2 is being moved in the advancing direction in the insertion section, an excessive frictional heat at the first butted portion J1 can be prevented from being generated. Furthermore, by gradually pulling out the stirring pin F2 while the stirring pin F2 is being moved in the advancing direction in the leaving section, an excessive frictional heat at the first butted portion J1 can be prevented from being generated.

By setting the inclination angle γ of the rotational axis C of the rotary tool F with respect to a vertical plane to the value obtained by subtracting the inclination angle β of the step side face 12b with respect to a vertical plane from the inclination angle α of the outer circumferential face of the stirring pin F2 with respect to the rotational axis C, optimal values can be determined as the inclination angles α, β. For example, the inclination angle α is determined by a design concept for a rotary tool in the technical field of friction stir welding (FSW) . Further, the inclination angle β is determined by the mold design concept in the casting field (for example, die casting) . Namely, each of the inclination angles α and β has an optimal value according to the corresponding design concept. Therefore, setting "α = β" is sometimes difficult. However, since each of the inclination angles α and β can be freely determined according to this embodiment, optimal values can be determined as the inclination angles α, β.

Since the stirring pin F2 is just slightly brought in contact with the step side face 12b, the unbalance of the material resistances which the stirring pin F2 receives on one side and the other side thereof can be reduced as much as possible. The one side and the other side are each located on the opposite side across the rotational axis C of the stirring pin F2. This leads to frictionally stir the plastically fluidized material with good balance. Therefore, lowering of the joint strength can be restrained.

In the primary joining process, a rotational direction and an advancing direction of the rotary tool F may be appropriately set, but the rotational direction and the advancing direction of the rotary tool F have been set so that the jacket body 2 side is a shear side and the sealing body 3 side is a flow side within the plasticized region W1 to be formed along the moving track of the rotary tool F. This enhances the stirring action around the first butted portion J1 due to the stirring pin F2, so that rising of the temperature at the first butted portion J1 can be expected, and the step side face 12b and the side face 3c of the sealing body 3 can be more firmly joined at the first butted portion J1.

The first aluminum alloy of the jacket body 2 is harder than the second aluminum alloy of the sealing body 3. This can enhance the endurance of the liquid-cooling jacket 1. Furthermore, it is preferable that the first aluminum alloy of the jacket body 2 is an aluminum alloy casting material and the second aluminum alloy of the sealing body 3 is an aluminum alloy expansible material. In a case where the first aluminum alloy is, for example, the aluminum alloy casting material based on Al-Si-Cu such as JISH5302 ADC12, castability, strength and machinability of the jacket body 2 can be enhanced. And in a case where the second aluminum alloy is, for example, a material based on JIS A1000 or A6000, processing ability and thermal conductivity can be enhanced.

### <Third embodiment>

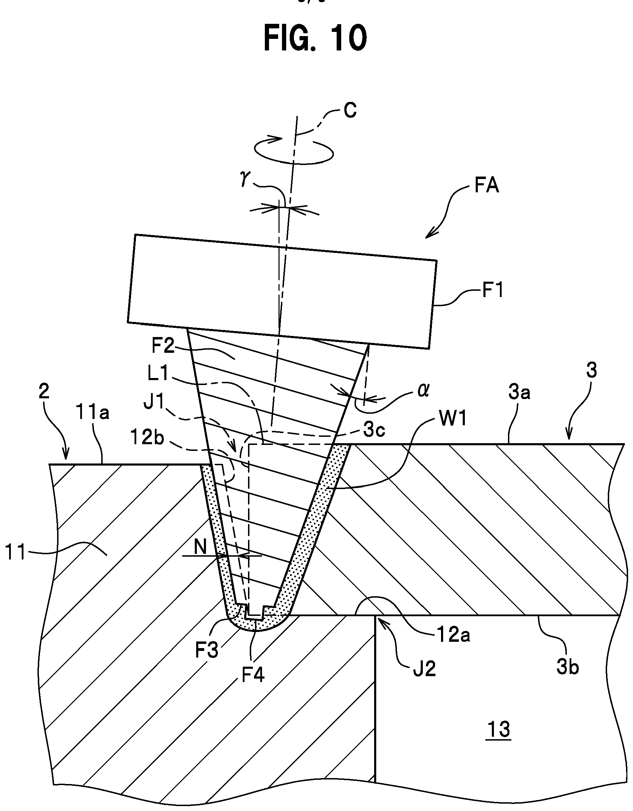

Next, a method for manufacturing a liquid-cooling jacket according to a third embodiment will be described. As shown in FIG. 10, this embodiment differs from the other embodiments in that a rotary tool FA is used. In this embodiment, differences from the other embodiments will be mainly described.

The rotary tool FA to be used in the primary joining process is configured to have a connecting portion F1 and a stirring pin F2. The stirring pin F2 is provided with a tip face F3 and a projecting portion F4. The projecting portion F4 is a portion projecting downward from the tip face F3. The shape of the projecting portion F4 is not specifically limited, but is cylindrical in this embodiment. A step portion is formed by a side face of the projecting portion F4 and the tip face F3.

In the primary joining process in this embodiment, the tip of the rotary tool FA is inserted deeper than the step bottom face 12a (the side face of the projecting portion F4 is located at the step bottom face 12a) . Hereby, the plastically fluidized material, which is frictionally stirred along the projecting portion F4 and wound up by the projecting portion F4, is pressed by the tip face F3. This leads the area around the projecting portion F4 to be steadily frictionally stirred and the oxide film of the second butted portion J2 is steadily divided. Therefore, the joining strength of the second butted portion J2 can be enhanced. Since the other operations and effects are substantially the same as those in the other embodiments, description thereof will be omitted.

Note that, the projecting portion F4 (tip of the stirring pin F2) has been set to be inserted deeper than the second butted portion J2 in the third embodiment shown in FIG. 9, but the tip face F3 may be set to be inserted deeper than the second butted portion J2.

In the above, embodiments of the invention have been described, but designs can be appropriately changed without deviating the purpose of the invention. For example, in the first embodiment, friction stirring may be performed in a state that the tip face F3 of the stirring pin F2 is in contact with the step bottom face 12a. Furthermore, in the second embodiment, friction stirring may be performed in a state that the tip face F3 of the stirring pin F2 is not in contact with the step bottom face 12a. And further, in the embodiments, the outer circumferential face of the stirring pin F2 is slightly brought in contact with the step side face 12b, but friction stirring may be performed in a state that the stirring pin F2 and the step side face 12b are not brought in contact with each other within a range where the jacket body 2 and the sealing body 3 can be joined by friction stirring.

### REFERENCE SIGNS LIST

- 1: Liquid-cooling jacket
- 2: Jacket body
- 3: Sealing body
- F: Rotary tool
- F1: Connecting portion
- F2: Stirring pin
- F3: Tip face
- J1: First butted portion
- J2: Second butted portion
- W1: Plasticized region

## Claims

1. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body,
wherein in the primary joining process, after only the stirring pin of the rotary tool being rotated is inserted at a starting position set at a position on an inner side relative to the set moving track, the stirring pin is gradually inserted down to the predetermined depth while a rotational axis of the rotary tool is being moved to a position on the set moving track, the friction stir welding is performed in a state that γ = α - β, where γ is an inclination angle of the rotational axis of the rotary tool with respect to a vertical plane, β is an inclination angle of the step side face with respect to a vertical plane, and α is an inclination angle of the outer circumferential face of the stirring pin with respect to the rotational axis.

2. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein the stirring pin has an outer circumferential face inclined to have a smaller diameter with increasing distance toward a tip thereof and a flat tip face,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face,
wherein in the primary joining process, after only the stirring pin of the rotary tool being rotated is inserted at a starting position set at a position on an inner side relative to the set moving track, the stirring pin is gradually inserted down to the predetermined depth while a rotational axis of the rotary tool is being moved to a position on the set moving track, the friction stir welding is performed in a state that γ = α - β, where γ is an inclination angle of the rotational axis of the rotary tool with respect to a vertical plane, β is an inclination angle of the step side face with respect to a vertical plane, and α is an inclination angle of the outer circumferential face of the stirring pin with respect to the rotational axis.

3. The method for manufacturing a liquid-cooling jacket according to claim 1 or 2,
wherein in the primary joining process, friction stirring is performed in a state of rotating the stirring pin at a predetermined rotational speed, and
wherein in the primary joining process, the stirring pin is inserted in a state of being rotated at a rotational speed higher than the predetermined rotational speed when the stirring pin is inserted, and moved to the set moving track while the rotational speed is gradually decreased.

4. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body,
wherein in the primary joining process, the stirring pin is inserted at a starting position set on the set moving track, and gradually inserted down to the predetermined depth while being advanced in an advancing direction, and the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis.

5. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein the stirring pin has an outer circumferential face inclined to have a smaller diameter with increasing distance toward a tip thereof and a flat tip face,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face,
wherein in the primary joining process, the stirring pin is inserted at a starting position set on the set moving track, and gradually inserted down to the predetermined depth while being advanced in an advancing direction, and the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis.

6. The method for manufacturing a liquid-cooling jacket according to claim 4 or 5,
wherein in the primary joining process, friction stirring is performed in a state of rotating the stirring pin at a predetermined rotational speed, and
wherein in the primary joining process, the stirring pin is inserted in a state of being rotated at a rotational speed higher than the predetermined rotational speed when the stirring pin is inserted, and moved to the set moving track while the rotational speed is gradually decreased.

7. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body,
wherein in the primary joining process, an ending position is set on an inner side relative to the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

8. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein the stirring pin has an outer circumferential face inclined to have a smaller diameter with increasing distance toward a tip thereof and a flat tip face,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face,
wherein in the primary joining process, an ending position is set on an inner side relative to the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

9. The method for manufacturing a liquid-cooling jacket according to claim 7 or 8,
wherein in the primary joining process, friction stirring is performed in a state of rotating the stirring pin at a predetermined rotational speed, and
wherein in the primary joining process, the stirring pin is moved to the ending position while gradually increasing a rotational speed of the stirring pin from the predetermined rotational speed when the stirring pin is made to leave.

10. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein an outer circumferential face of the stirring pin is inclined to have a smaller diameter with increasing distance toward a tip thereof,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that only the stirring pin of the rotary tool being rotated is in contact with the sealing body and also slightly in contact with the step side face of the jacket body,
wherein in the primary joining process, an ending position is set on the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

11. A method for manufacturing a liquid-cooling jacket, in which a jacket body provided with a bottom portion and a peripheral wall portion standing on a peripheral edge of the bottom portion, and a sealing body to seal an opening portion of the jacket body are joined with use of a rotary tool provided with a stirring pin,
wherein the jacket body is made of a first aluminum alloy, the sealing body is made of a second aluminum alloy, and the first aluminum alloy is a material harder than the second aluminum alloy, and
wherein the stirring pin has an outer circumferential face inclined to have a smaller diameter with increasing distance toward a tip thereof and a flat tip face,
the method comprising:
a preparation process in which a peripheral wall step portion having a step bottom face and a step side face is formed along an inner peripheral edge of the peripheral wall portion, the step side face obliquely standing from the step bottom face toward the opening portion to spread, and the sealing body is formed to have a thickness larger than a height dimension of the step side face of the peripheral wall step portion;
a placing process in which by placing the sealing body on the jacket body, a first butted portion is formed to have a gap between the step side face of the peripheral wall step portion and an outer peripheral side face of the sealing body when the step side face of the peripheral wall step portion and the outer peripheral side face of the sealing body are butted against each other and a second butted portion is formed by overlapping the step bottom face and a back face of the sealing body; and
a primary joining process in which friction stir welding is performed while the rotary tool is being moved one round along the first butted portion with a predetermined depth along a set moving track set at an inner position relative to the outer peripheral side face of the sealing body in a state that a tip of the stirring pin of the rotary tool being rotated is inserted deeper than the step bottom face and the outer circumferential face of the stirring pin is slightly in contact with the step side face,
wherein in the primary joining process, an ending position is set on the set moving track, the friction stir welding is performed in a state that γ = α - β, where γ is an inclination angle of a rotational axis of the rotary tool with respect to a vertical plane, β is an inclination angle of the step side face with respect to a vertical plane, and α is an inclination angle of the outer circumferential face of the stirring pin with respect to the rotational axis, then, the stirring pin is gradually pulled out while the rotary tool is being moved to the ending position, and the rotary tool is made to leave the ending position of the sealing body.

12. The method for manufacturing a liquid-cooling jacket according to claim 10, 11,
wherein in the primary joining process, friction stirring is performed in a state of rotating the stirring pin at a predetermined rotational speed, and
wherein in the primary joining process, the stirring pin is moved to the ending position while gradually increasing a rotational speed of the stirring pin from the predetermined rotational speed when the stirring pin is made to leave.

13. The method for manufacturing a liquid-cooling jacket according to any one of claims 1, 2, 4, 5, 7, 8, 10, and 11,
wherein the sealing body is made of an aluminum alloy expansible material and the jacket body is made of an aluminum alloy casting material.

14. The method for manufacturing a liquid-cooling jacket according to any one of claims 1, 2, 4, 5, 7, 8, 10, and 11,
wherein the rotary tool is rotated clockwise in a case where the rotary tool has a spiral groove on the outer circumferential face thereof, the spiral groove being counterclockwise with increasing distance from a base end toward a tip thereof, and
wherein the rotary tool is rotated counterclockwise in a case where the rotary tool has a spiral groove on the outer circumferential face thereof, the spiral groove being clockwise with increasing distance from the base end toward the tip thereof.

15. The method for manufacturing a liquid-cooling jacket according to any one of claims 1, 2, 4, 5, 7, 8, 10, and 11,
wherein in the primary joining process, a rotational direction and an advancing direction of the rotary tool are set so that within a plasticized region to be formed along a moving track of the rotary tool, a jacket body side is a shear side and a sealing body side is a flow side.
